# FASCICULE DE BREVET EUROPEEN

(11) **EP 4 470 752 B1**
(45) Date de publication et mention de la délivrance du brevet: **24.12.2025**
(21) Numéro de dépôt: 24175704.6
(22) Date de dépôt: 14.05.2024
(51) Int. Cl.: B29C 49/64, B29C 49/68, B29C 49/06, B29C 49/78, B29K 67/00, B29L 31/00

(54) **UNITÉ DE TRAITEMENT THERMIQUE DE PRÉFORMES COMPRENANT DES ÉLÉMENTS DE CHAUFFAGE CONNECTÉS EN SÉRIE**
EINHEIT ZUR WÄRMEBEHANDLUNG VON VORFORMLINGEN MIT IN REIHE GESCHALTETEN HEIZELEMENTEN
UNIT FOR THE THERMAL TREATMENT OF PREFORMS, COMPRISING HEATING ELEMENTS CONNECTED IN SERIES

(30) Priorité: 31.05.2023 FR 2305384
(43) Date de publication de la demande: 04.12.2024
(73) Titulaire: Sidel Participations, 76930 Octeville-sur-Mer (FR)
(72) Inventeur: FEUILLOLEY, Guy, 76930 OCTEVILLE-SUR-MER (FR); PASQUIER, Hervé, 76930 OCTEVILLE-SUR-MER (FR)
(74) Mandataire: Sidel Group

(56) Documents cités:
- EP-B1- 2 782 741
- US-A1- 2017 136 681
- US-A1- 2020 307 064
- US-A1- 2020 406 544
- US-B2- 11 633 898

## Description

La présente invention concerne une unité de traitement thermique de préformes d'une installation de fabrication de récipients du type comprenant une enceinte délimitée par une première paroi et une deuxième paroi s'étendant de part et d'autre de l'enceinte au sein de laquelle défilent les préformes selon un trajet de circulation prédéfini s'étendant selon une direction longitudinale, la première paroi comprenant au moins un premier élément de chauffage et la deuxième paroi comprenant au moins un deuxième élément de chauffage, formant, avec le premier élément de chauffage, une paire d'éléments de chauffage, le premier élément de chauffage et le deuxième élément de chauffage s'étendant au moins en partie en regard l'un de l'autre de part et d'autre de l'enceinte selon une direction transversale, sensiblement perpendiculaire à la direction longitudinale, chaque élément de chauffage étant alimenté en électricité par une source de courant.

Une telle unité de traitement thermique, ou four, est généralement équipée d'une pluralité d'éléments de chauffage agencés pour émettre de la chaleur en direction de préformes en matériau synthétique défilant dans l'unité de traitement thermique en tournant sur elles-mêmes afin d'appliquer un profil de chauffage sur ces préformes et permettre leur déformation ultérieure par exemple par étirage soufflage de sorte à réaliser des récipients à partir des préformes.

Il a par exemple été proposé de prévoir que l'enceinte de l'unité de traitement thermique soit délimitée par deux parois s'étendant le long du trajet des préformes et comprenant chacune des éléments de chauffage émettant de la chaleur dans l'enceinte. Un tel agencement permet d'améliorer la distribution énergétique dans l'enceinte et d'améliorer le rendement d'une unité de traitement thermique. Le document EP 2 782 741 décrit par exemple une telle unité de traitement thermique.

Cependant, il devient difficile d'appliquer un profil thermique uniforme aux différentes préformes circulant entre les éléments de chauffage car, même si les éléments de chauffage sont pilotés de façon synchronisée, notamment pour faire varier la puissance de chauffage, il existe en pratique souvent un décalage entre l'application d'une consigne aux éléments de chauffage s'étendant sur l'une des parois et l'application de la même consigne aux éléments de chauffage s'étendant sur l'autre paroi. Cela peut résulter en une irrégularité des récipients produits à partir des préformes dont le profil de chauffage n'est pas uniformément appliqué d'une préforme à l'autre. Ce problème est d'autant plus important lorsque l'unité de chauffage comprend deux rangées de préformes circulant parallèlement dans l'enceinte, comme proposé dans le document EP 2 782 741. En effet, dans ce cas, les préformes de chaque rangée sont plus exposées à la chaleur venant de la paroi dont elles sont le plus proche et tout écart de chaleur entre les éléments de chauffage disposés de part et d'autre de l'enceinte entraîne une différence dans le profil thermique appliqué aux préformes de chaque rangée, ce qui entraîne la formation de récipients présentant des caractéristiques différentes selon que les récipients sont formés à partir de préformes venant de l'une ou de l'autre rangée.

L'un des buts de l'invention est de pallier ces inconvénients en proposant une unité de traitement thermique comprenant des éléments de chauffage s'étendant de part et d'autre d'une enceinte et délivrant la même puissance de chauffage.

A cet effet, l'invention concerne une unité de traitement thermique du type précité, dans laquelle les premier et deuxième éléments de chauffage de ladite paire d'éléments de chauffage sont connectés électriquement en série à la même source de courant.

En connectant les éléments de chauffage d'une paire d'éléments de chauffage s'étendant de part et d'autre de l'enceinte en série avec une même source de courant, on assurer que le courant qui traverse les deux éléments de chauffage est le même. Comme la puissance de chauffage est directement liée à la valeur du courant qui circule dans ce circuit en série, les puissances de chauffage délivrées par les deux éléments de chauffage sont ainsi identiques. En outre, lors des variations de consignes, la modification de la valeur du courant s'applique simultanément aux deux éléments de chauffage, ce qui permet d'obtenir une même puissance instantanée délivrée par les deux éléments de chauffage.

L'unité de traitement thermique selon l'invention peut en outre comprendre l'une ou plusieurs des caractéristiques suivantes, prises isolément ou selon toute combinaison techniquement envisageable :
- l'unité de traitement thermique comprenant une pluralité de paires d'éléments de chauffage et une pluralité de sources de courant, chaque paire d'éléments de chauffage étant connectée électriquement en série à une source de courant correspondante,
- les premiers éléments de chauffage desdites paires sont répartis au moins selon la direction longitudinale sur la première paroi et les deuxièmes éléments de chauffage desdites paires sont répartis selon la direction longitudinale sur la deuxième paroi, les premier et deuxième éléments de chauffage d'une paire d'éléments de chauffage s'étendant au moins en partie en regard l'un de de l'autre selon la direction transversale,
- les premiers éléments de chauffage desdites paires sont répartis au moins selon une direction d'élévation, sensiblement perpendiculaire aux directions longitudinale et transversale, sur la première paroi et les deuxièmes éléments de chauffage desdites paires sont répartis selon la direction d'élévation sur la deuxième paroi, les premier et deuxième éléments de chauffage d'une paire d'éléments de chauffage s'étendant au moins en partie en regard l'un de l'autre selon la direction transversale,
- les premier et deuxième éléments de chauffage comprennent chacun une pluralité de sources de rayonnement électromagnétique monochromatique ou pseudo-monochromatique,
- les premier et deuxième éléments de chauffage comprennent chacun au moins une rangée supérieure et au moins une rangée inférieure de sources de rayonnement électromagnétique, lesdites sources de rayonnement étant connectées électriquement en série les unes avec les autres,
- le premier élément de chauffage et le deuxième élément de chauffage sont décalés l'un par rapport à l'autre selon la direction longitudinale,
- un circuit électrique connectant le premier élément de chauffage, le deuxième élément de chauffage et la source de courant en série comprend au moins un dispositif de mesure de la tension dans ledit circuit électrique,
- l'unité de traitement thermique comprend au moins un dispositif de commande du courant dans le circuit électrique connectant le premier élément de chauffage, le deuxième élément de chauffage et la source de courant en série, ledit dispositif de commande étant agencé pour faire varier le courant dans le circuit électrique afin de faire varier simultanément la puissance de chauffage délivrée par le premier élément de chauffage et par le deuxième élément de chauffage,
- l'unité de traitement thermique comprend un système de préhension et de déplacement des préformes selon le trajet de circulation prédéfini sur deux rangées en quinconce dans l'enceinte

D'autres aspects et avantages de l'invention apparaîtront plus clairement à la lecture de la description qui va suivre, donnée uniquement à titre d'exemple non limitatif, et faite en référence aux dessins annexés dans lesquels :
[Fig.1] - la [Fig.1] est une représentation schématique en coupe d'une partie d'une unité de traitement thermique comprenant une pluralité d'éléments de chauffage selon un mode de réalisation de l'invention,
[Fig.2] - la [Fig.2] est une représentation schématique d'un circuit de connexion électrique de deux éléments de chauffage d'une paire d'éléments de chauffage selon l'invention, et
[Fig.3] - la [Fig.3] est une représentation schématique en coupe d'une partie d'une unité de traitement thermique comprenant une pluralité d'éléments de chauffage selon un autre mode de réalisation de l'invention.

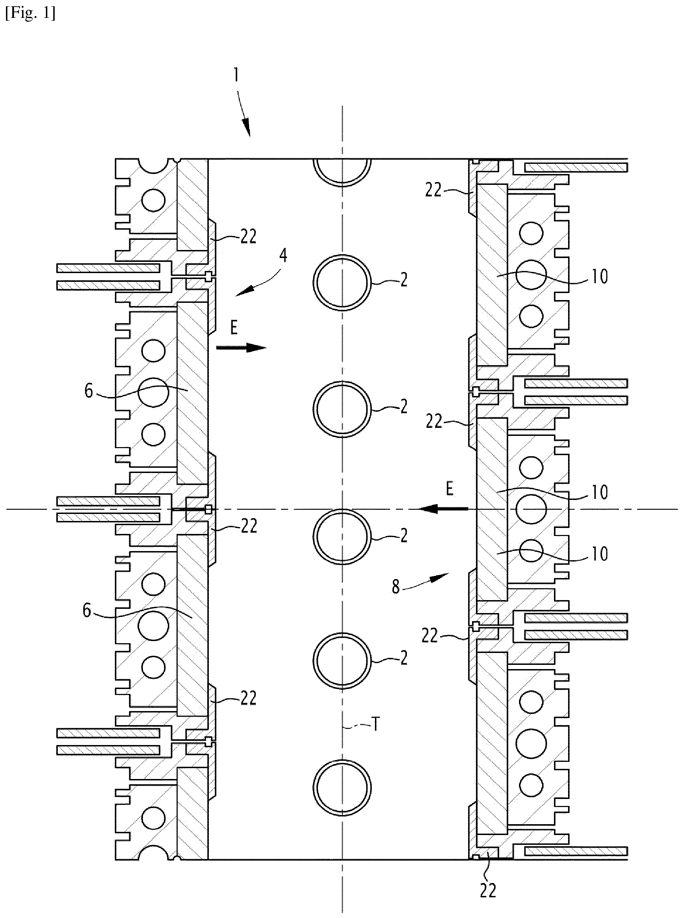

En référence à la [Fig.1], on décrit une unité de traitement thermique 1, ou four, d'une installation de fabrication de récipients à partir de préformes **2,** comprenant une pluralité d'éléments de chauffage.

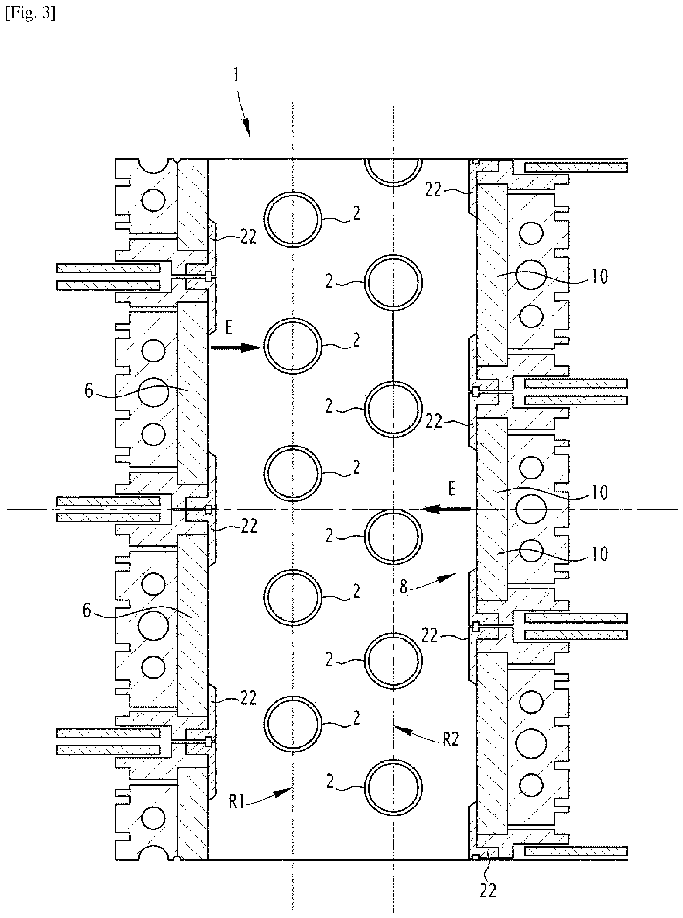

Plus particulièrement, l'unité de traitement thermique 1 comprend une première paroi **4,** comprenant au moins un premier élément de chauffage **6,** et une deuxième paroi **8,** comprenant au moins un deuxième élément de chauffage **10.** Les première et deuxième parois 4, 8 sont opposées de part et d'autre de l'unité de traitement thermique 1 et définissent entre elles une enceinte au sein de laquelle circulent les préformes 2 selon un trajet de circulation **T** prédéfini et définissant une direction longitudinale. Les première et deuxième parois 4, 8 sont espacées l'une de l'autre selon une direction transversale sensiblement perpendiculaire à la direction longitudinale de sorte à s'étendre de part et d'autre du trajet de circulation T. Sur les Figs. 1 et 3, le trajet de circulation T a été représenté comme étant rectiligne, mais il est entendu qu'il pourrait être incurvé dans certaines zones en fonction de la configuration de l'installation de fabrication de récipients. L'unité de traitement thermique comprend un système de préhension et de déplacement des préformes 2 (non représenté) selon le trajet de circulation T entre les première et deuxième parois 4, 8. Les préformes 2 sont plus particulièrement maintenues de sorte que leur axe respectif s'étende selon une direction d'élévation sensiblement perpendiculaire à la direction longitudinale et à la direction transversale. En d'autres termes, la direction d'élévation correspond à la hauteur des préformes 2 et à la hauteur des première et deuxième parois 4, 8. De façon connue, le système de préhension peut être agencé pour que les préformes 2 tournent autour de leur axe lorsqu'elles circulent selon le trajet de circulation T.

Selon le mode de réalisation de la [Fig.1], les préformes 2 sont alignées les unes à la suite des autres en une rangée s'étendant selon le trajet de circulation T. En variante représentée sur la [Fig.3], les préformes 2 circulent sur au moins deux rangées **R1, R2** parallèles selon le trajet de circulation T, les préformes 2 étant disposées en quinconce dans l'enceinte. Par en quinconce, on entend que les préformes 2 d'une rangée R1 sont décalées selon la direction longitudinale par rapport aux préformes 2 de l'autre rangée R2. L'écartement selon la direction transversale entre les rangées R1, R2, et l'écartement selon la direction longitudinale entre les préformes 2 peuvent être ajustés en fonction notamment du diamètre des préformes 2. L'entraînement sur deux rangées peut être similaire à celui des préformes 2 sur une rangée unique.

Le premier élément de chauffage 6 et le deuxième élément de chauffage 10 sont associés l'un à l'autre, comme cela sera décrit plus en détail ultérieurement, pour former une paire d'élément de chauffage. Comme cela décrit plus en détail ultérieurement, l'unité de traitement thermique 1 comprend par exemple plusieurs paires d'éléments de chauffage, formées chacune d'un premier élément de chauffage 6 s'étendant sur la première paroi 4 et d'un deuxième élément de chauffage 10 s'étendant sur la deuxième paroi 8. Les premier et deuxième éléments de chauffage 6, 10 s'étendent au moins en partie l'un en regard de l'autre de part et d'autre de l'enceinte. Par « s'étendent au moins en partie l'un en regard de l'autre de part et d'autre de l'enceinte », on entend que les premier et deuxième éléments de chauffage 6, 10 s'étendent sensiblement à une même hauteur selon la direction d'élévation et au moins en partie l'un en face de l'autre selon la direction transversale. Selon un mode de réalisation, les premier et deuxième éléments de chauffage 6, 10 d'une paire d'élément de chauffage sont toutefois décalés l'un par rapport à l'autre selon la direction longitudinale de sorte que le deuxième élément de chauffage 10 ne s'étend qu'en partie en regard du premier élément de chauffage 6. Un tel mode de réalisation est par exemple décrit dans le document EP 2 782 741 et l'homme du métier pourra se référer à ce document pour obtenir plus de détail sur un tel mode de réalisation, notamment en termes de dimensionnement et de positionnement des éléments de chauffage les uns par rapport aux autres.

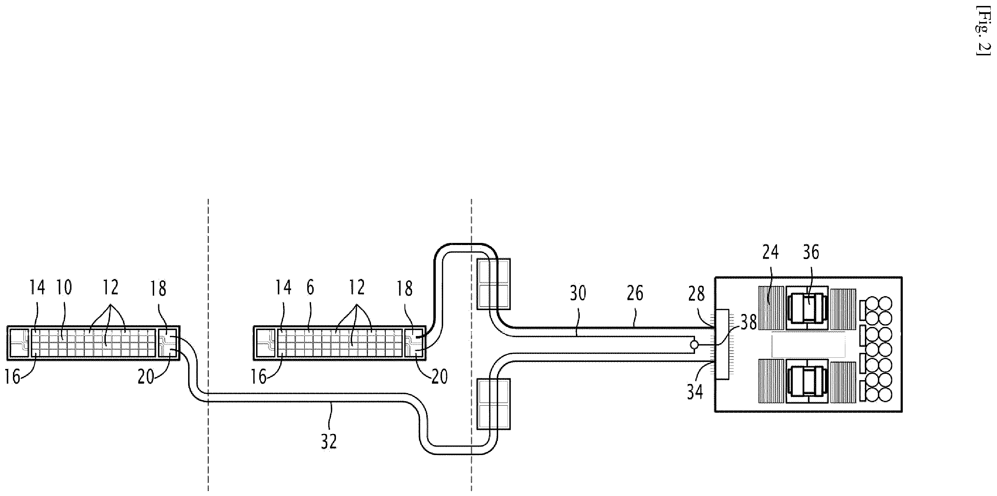

Le premier élément de chauffage 6 et le deuxième élément de chauffage 10 d'une paire d'éléments de chauffage sont identiques, comme visible sur la [Fig.2]. Ainsi, seul le premier élément de chauffage 6 va à présent être décrit plus en détail.

Le premier élément de chauffage 6 comprend par exemple une pluralité de sources de rayonnement **12** électromagnétique monochromatique ou pseudo-monochromatique. Plus particulièrement, le premier élément de chauffage 6 est par exemple un émetteur laser et les sources de rayonnement 12 sont des puces laser agencées pour émettre un rayonnement laser dans le domaine de l'infrarouge selon une direction d'émission E sensiblement parallèle à la direction transversale. Les sources de rayonnement 12 sont par exemple agencées les unes à côté des autres sur un support de sorte à former au moins une rangée de sources de rayonnement 12 s'étendant selon la direction longitudinale. Selon un mode de réalisation, les sources de rayonnement 12 forment au moins une rangée supérieure **14** et au moins une rangée inférieure **16** disposées l'une au-dessus de l'autre selon la direction d'élévation. Selon le mode de réalisation représenté sur la [Fig.2], chaque élément de chauffage 6, 10 comprend deux rangées supérieures 14 et deux rangées inférieures 16 de sources de rayonnement 12. Les sources de rayonnement 12 sont connectées électriquement en série les unes aux autres entre une borne de connexion positive **18** et une borne de connexion négative **20.**

De tels éléments de chauffage sont par exemple décrits dans le document FR 3 124 030 et l'homme du métier pourra se référer à ce document pour obtenir plus de détail, notamment en ce qui concerne la structure de chaque source de rayonnement 12, l'agencement des sources de rayonnement 12 sur un support, la connexion des sources de rayonnement 12 entre elles et le refroidissement des éléments de chauffage. Il est entendu que l'invention n'est pas limitée à des éléments de chauffage formés par des émetteurs laser et s'applique également à d'autres types d'élément de chauffage, tels que des lampes tubulaires à incandescence de type halogène.

Lorsque l'unité de traitement thermique 1 comprend plusieurs paires d'éléments de chauffage, les éléments de chauffage sont répartis pour exposer l'ensemble de l'enceinte, en dehors d'une zone dans laquelle s'étendent le col des préformes, à la chaleur émise par les éléments de chauffage. Ainsi, les premiers éléments de chauffage 6 sont par exemple répartis au moins selon la direction longitudinale sur la première paroi 4 et les deuxièmes éléments de chauffage 10 sont par exemple répartis au moins selon la direction longitudinale sur la deuxième paroi 8, les premier et deuxième éléments de chauffage 6, 10 d'une paire d'éléments de chauffage s'étendant au moins en partie en regard l'un de de l'autre selon la direction transversale. En variante ou en complément, les premiers éléments de chauffage 6 sont par exemple répartis au moins selon la direction d'élévation sur la première paroi 4 et les deuxièmes éléments de chauffage 10 sont par exemple répartis selon la direction d'élévation sur la deuxième paroi 8, les premier et deuxième éléments de chauffage 6, 10 d'une paire d'éléments de chauffage s'étendant au moins en partie en regard l'un de l'autre selon la direction transversale.

Lorsque les premier et deuxième éléments de chauffage 6, 10 d'une paire d'éléments de chauffage sont décalés l'un par rapport à l'autre selon la direction longitudinale, le premier élément de chauffage 6 s'étend au moins en partie en regard d'une section réfléchissante 22 de la deuxième paroi 8 et le deuxième élément de chauffage 10 s'étend en regard d'une section réfléchissante 22 de la première paroi 4. Les secteurs réfléchissants 22 s'étendent par exemple entre des colonnes d'élément de chauffage adjacentes de sorte que la première et la deuxième parois 4, 8 sont à la fois émettrices de chaleur et réfléchissantes de la chaleur. Comme indiqué précédemment, un tel agencement d'unité de traitement thermique 1 est déjà connu en soi et ne sera pas décrit plus en détail ici. L'homme du métier peut se référer au document EP 2 782 741.

La ou chaque paire d'éléments de chauffage est alimentée en électricité par une même source de courant **24,** comme représenté sur la [Fig.2]. En d'autres termes, lorsque l'unité de traitement thermique comprend plusieurs paires d'éléments de chauffage, l'unité de traitement thermique 1 comprend au moins autant de sources de courant 24 alimentant chacune une des paires d'éléments de chauffage. L'alimentation en électricité des paires d'éléments de chauffage au moyen de sources de courant 24 étant identique pour chaque paire d'élément de chauffage, un seul circuit d'alimentation entre les premier et deuxième éléments de chauffage 6, 10 et une source de courant 24 va à présent être décrit.

Comme représenté sur la [Fig.2], les premier et deuxième éléments de chauffage 6, 10 de la paire d'éléments de chauffage sont connectés électriquement en série à la même source de courant 24. En d'autres termes, le circuit électrique connectant le premier élément de chauffage 6, le deuxième élément de chauffage 10 et la source de courant 24 en série comprend au moins :
- une connexion **26** allant d'une borne de connexion positive **28** de la source de courant 24 à la borne de connexion positive 18 du premier élément de chauffage 6,
- une connexion **30** allant de la borne de connexion négative 20 du premier élément de chauffage 6 à la borne de connexion positive du deuxième élément de chauffage 10, et
- une connexion **32** allant de la borne de connexion négative 20 du deuxième élément de chauffage 10 à une borne de connexion négative **34** de la source de courant 24.

En reliant le premier élément de chauffage 6 et le deuxième élément de chauffage 10 d'une paire d'éléments de chauffage en série avec la même source de courant 24, on s'assure que la puissance de chauffage, par exemple la puissance laser, délivrée par le premier élément de chauffage 6 est identique à la puissance de chauffage délivrée par le deuxième élément de chauffage 10. En effet, la puissance de chauffage délivrée par un élément de chauffage est directement liée au courant traversant cet élément de chauffage de sorte qu'en connectant le premier élément de chauffage 6 et le deuxième élément de chauffage 10 en série, il est garanti que le courant qui traverse les premier et deuxième éléments de chauffage 6, 10 est le même et que la puissance de chauffage délivrée par ces éléments de chauffage est également la même. Ainsi, les préformes 2 circulant dans l'enceinte sont exposées à la même puissance de chauffage venant de la première paroi 4 et de la deuxième paroi 8, ce qui garantit l'application uniforme du profil de chauffage souhaité. L'invention est en outre particulièrement avantageuse lorsque les préformes 2 circulent sur deux rangées R1, R2 dans l'enceinte, comme décrit précédemment. En effet, dans ce cas, les préformes 2 de la rangée R1 sont plus proches de la première paroi 4 tandis que les préformes 2 de la rangée R2 sont plus proches de la deuxième paroi 8. Afin que les préformes 2 des deux rangées R1, R2 se voient appliquer le même profil de chauffage, il est donc crucial que les éléments de chauffage des deux parois délivrent la même puissance de chauffage, ce qui est rendu possible par la connexion en série des premier et deuxième éléments de chauffage 6, 10 de chaque paire d'éléments de chauffage à une source de courant 24 attribuée à chaque paire d'éléments de chauffage.

En outre, l''invention permet également de réduire le nombre de sources de courant 24 de l'unité de traitement thermique par rapport à une unité de traitement dans laquelle chaque élément de chauffage est alimenté par une source de courant dédiée. En effet, une source de courant alimentant deux éléments de chauffage, le nombre de sources de courant est ainsi divisé par deux. Cela permet de réaliser des économies d'énergie et de réduire l'encombrement des sources de courant.

De plus, lorsque le profil de chauffage appliqué aux préformes 2 doit être modifié, l'invention permet de s'assurer que la modification de la puissance de chauffage soit appliquée simultanément sur le premier élément de chauffage 6 et sur le deuxième élément de chauffage 10 d'une paire d'élément de chauffage. En effet, en modifiant la valeur de courant délivrée par la source de courant 24, on modifie simultanément le courant qui traverse les premier et deuxième éléments de chauffage 6, 10 qui délivrent alors la même puissance instantanée. A cet effet, l'unité de traitement thermique 1 comprend par exemple un dispositif de commande **36** du courant dans le circuit électrique connectant le premier élément de chauffage, le deuxième élément de chauffage et la source de courant en série. Ce dispositif de commande est agencé pour faire varier le courant dans le circuit électrique connectant le premier élément de chauffage, le deuxième élément de chauffage , en faisant varier la valeur du courant délivré par la source de courant 24, afin de faire varier simultanément la puissance de chauffage du premier élément de chauffage 6 et du deuxième élément de chauffage 10. Un tel dispositif de commande 36 est par exemple formé par une carte drive. Selon le mode de réalisation représenté sur la [Fig.2], un dispositif de commande 36 peut former deux sources de courant 24 avec les bornes de connexion correspondantes afin de piloter simultanément deux paires d'éléments de chauffage, par exemple des paires d'éléments de chauffage disposées l'une au-dessus de l'autre selon la direction d'élévation.

Selon le mode de réalisation représenté sur la [Fig.2], la connexion 30 allant de la borne de connexion négative 20 du premier élément de chauffage 6 à la borne de connexion positive du deuxième élément de chauffage 10 comprend en outre un point de connexion **38** à un dispositif de mesure de la tension (non représenté) dans le circuit d'alimentation. Une telle mesure de la tension permet de s'assurer du bon fonctionnement des éléments de chauffage en surveillant la tension aux bornes de chaque élément de chauffage. Le dispositif de mesure de la tension est par exemple relié au dispositif de commande 36, comme représenté sur la [Fig.2], afin de permettre un suivi des tensions de chaque élément de chauffage pour le courant appliqué. La tension mesurée étant liée aux conditions de fonctionnement des éléments de chauffage, conditions pouvant impacter la puissance de chauffage, le dispositif de commande 36 peut décider de modifier la consigne appliquée à la source de courant 24. S'il est constaté que la tension aux bornes d'un ou des éléments de chauffage dérive des conditions nominales de fonctionnement desdits éléments de chauffage, le dispositif de commande 36 peut aussi décider de couper la source de courant 24 et/ou de transmettre un signal de défaut de fonctionnement. A titre d'exemple, un signal d'alerte peut être émis en cas d'une dérive comprise entre 2,5% et 4% tandis que la source de courant est coupée en cas d'une dérive supérieure ou égale à 4%.

## Revendications

1. Unité de traitement thermique (1) de préformes (2) d'une installation de fabrication de récipients, l'unité de traitement thermique comprenant une enceinte délimitée par une première paroi (4) et une deuxième paroi (8) s'étendant de part et d'autre de l'enceinte au sein de laquelle défilent les préformes (2) selon un trajet de circulation (T) prédéfini s'étendant selon une direction longitudinale, la première paroi (4) comprenant au moins un premier élément de chauffage (6) et la deuxième paroi (8) comprenant au moins un deuxième élément de chauffage (10), formant, avec le premier élément de chauffage (6), une paire d'éléments de chauffage, le premier élément de chauffage (6) et le deuxième élément de chauffage (10) s'étendant au moins en partie en regard l'un de l'autre de part et d'autre de l'enceinte selon une direction transversale, sensiblement perpendiculaire à la direction longitudinale, chaque élément de chauffage (6, 10) étant alimenté en électricité par une source de courant (24), **caractérisée en ce que** les premier et deuxième éléments de chauffage (6, 10) de ladite paire d'éléments de chauffage sont connectés électriquement en série à la même source de courant (24).

2. Unité de traitement thermique selon la revendication 1, comprenant une pluralité de paires d'éléments de chauffage et une pluralité de sources de courant (24), chaque paire d'éléments de chauffage étant connectée électriquement en série à une source de courant (24) correspondante.

3. Unité de traitement thermique selon la revendication 2, dans laquelle les premiers éléments de chauffage (6) desdites paires sont répartis au moins selon la direction longitudinale sur la première paroi (4) et les deuxièmes éléments de chauffage (10) desdites paires sont répartis selon la direction longitudinale sur la deuxième paroi (8), les premier et deuxième éléments de chauffage (6, 10) d'une paire d'éléments de chauffage s'étendant au moins en partie en regard l'un de de l'autre selon la direction transversale.

4. Unité de traitement thermique selon la revendication 2 ou 3, dans laquelle les premiers éléments de chauffage (6) desdites paires sont répartis au moins selon une direction d'élévation, sensiblement perpendiculaire aux directions longitudinale et transversale, sur la première paroi (4) et les deuxièmes éléments de chauffage (10) desdites paires sont répartis selon la direction d'élévation sur la deuxième paroi (8), les premier et deuxième éléments de chauffage (6, 10) d'une paire d'éléments de chauffage s'étendant au moins en partie en regard l'un de l'autre selon la direction transversale.

5. Unité de traitement thermique selon l'une quelconque des revendications 1 à 4, dans laquelle les premier et deuxième éléments de chauffage (6, 10) comprennent chacun une pluralité de sources de rayonnement (12) électromagnétique monochromatique ou pseudo-monochromatique.

6. Unité de traitement thermique selon la revendication 5, dans laquelle les premier et deuxième éléments de chauffage (6, 10) comprennent chacun au moins une rangée supérieure (14) et au moins une rangée inférieure (16) de sources de rayonnement (12) électromagnétique, lesdites sources de rayonnement (12) étant connectées électriquement en série les unes avec les autres.

7. Unité de traitement thermique selon l'une quelconque des revendications 1 à 6, dans laquelle le premier élément de chauffage (6) et le deuxième élément de chauffage (10) sont décalés l'un par rapport à l'autre selon la direction longitudinale.

8. Unité de traitement thermique selon l'une quelconque des revendications 1 à 7, dans laquelle un circuit électrique (26, 30, 32) connectant le premier élément de chauffage (6), le deuxième élément de chauffage (10) et la source de courant (24) en série comprend au moins un dispositif de mesure de la tension dans ledit circuit électrique.

9. Unité de traitement thermique selon l'une quelconque des revendications 1 à 8, comprenant au moins un dispositif de commande (36) du courant dans le circuit électrique (26, 30, 32) connectant le premier élément de chauffage (6), le deuxième élément de chauffage (10) et la source de courant (24) en série, ledit dispositif de commande (36) étant agencé pour faire varier le courant dans le circuit électrique afin de faire varier simultanément la puissance de chauffage délivrée par le premier élément de chauffage (6) et par le deuxième élément de chauffage (10).

10. Unité de traitement thermique selon l'une quelconque des revendications 1 à 9, comprenant un système de préhension et de déplacement des préformes (2) selon le trajet de circulation (T) prédéfini sur deux rangées (R1, R2) en quinconce dans l'enceinte.

## Patentansprüche

1. Einheit zur Wärmebehandlung (1) von Vorformlingen (2) einer Anlage zur Herstellung von Behältern, wobei die Wärmebehandlungseinheit einen Raum umfasst, der durch eine erste Wand (4) und eine zweite Wand (8) begrenzt ist, die sich zu beiden Seiten des Raums erstrecken, in dem sich die Vorformlinge (2) entlang einer vordefinierten, sich in einer Längsrichtung erstreckenden Bewegungsbahn (T) bewegen, wobei die erste Wand (4) mindestens ein erstes Heizelement (6) umfasst und die zweite Wand (8) mindestens ein zweites Heizelement (10) umfasst, das mit dem ersten Heizelement (6) ein Heizelementepaar bildet, wobei sich das erste Heizelement (6) und das zweite Heizelement (10) in einer zur Längsrichtung im Wesentlichen senkrechten Querrichtung zumindest teilweise einander gegenüberliegend auf beiden Seiten des Raums erstrecken, wobei jedes Heizelement (6, 10) durch eine Stromquelle (24) mit Strom versorgt wird, **dadurch gekennzeichnet, dass** das erste und das zweite Heizelement (6, 10) des Heizelementepaars mit derselben Stromquelle (24) elektrisch in Reihe geschaltet sind.

2. Einheit zur Wärmebehandlung nach Anspruch 1, umfassend eine Mehrzahl von Heizelementepaaren und eine Mehrzahl von Stromquellen (24), wobei jedes Heizelementepaar mit einer entsprechenden Stromquelle (24) elektrisch in Reihe geschaltet ist.

3. Einheit zur Wärmebehandlung nach Anspruch 2, wobei die ersten Heizelemente (6) der Paare zumindest in der Längsrichtung an der ersten Wand (4) verteilt sind und die zweiten Heizelemente (10) der Paare in der Längsrichtung an der zweiten Wand (8) verteilt sind, wobei sich das erste und das zweite Heizelement (6, 10) eines Heizelementepaars in der Querrichtung zumindest teilweise einander gegenüberliegend erstrecken.

4. Einheit zur Wärmebehandlung nach Anspruch 2 oder 3, wobei die ersten Heizelemente (6) der Paare zumindest in einer zur Quer- und Längsrichtung im Wesentlichen senkrechten Höhenrichtung an der ersten Wand (4) verteilt sind und die zweiten Heizelemente (10) der Paare entlang der Höhenrichtung an der zweiten Wand (8) verteilt sind, wobei das sich erste und das zweite Heizelement (6, 10) eines Heizelementepaars in der Querrichtung zumindest teilweise einander gegenüberliegend erstrecken.

5. Einheit zur Wärmebehandlung nach einem der Ansprüche 1 bis 4, wobei das erste und das zweite Heizelement (6, 10) jeweils eine Mehrzahl von monochromatischen oder pseudo-monochromatischen elektromagnetischen Strahlungsquellen (12) umfassen.

6. Einheit zur Wärmebehandlung nach Anspruch 5, wobei das erste und das zweite Heizelement (6, 10) jeweils mindestens eine obere Reihe (14) und mindestens eine untere Reihe (16) von elektromagnetischen Strahlungsquellen (12) umfassen, wobei die Strahlungsquellen (12) in Reihe elektrisch miteinander verbunden sind.

7. Einheit zur Wärmebehandlung nach einem der Ansprüche 1 bis 6, wobei das erste Heizelement (6) und das zweite Heizelement (10) in der Längsrichtung zueinander versetzt sind.

8. Einheit zur Wärmebehandlung nach einem der Ansprüche 1 bis 7, wobei eine elektrische Schaltung (26, 30, 32), die das erste Heizelement (6), das zweite Heizelement (10) und die Stromquelle (24) in Reihe schaltet, mindestens eine Vorrichtung zum Messen der Spannung in der elektrischen Schaltung umfasst.

9. Einheit zur Wärmebehandlung nach einem der Ansprüche 1 bis 8, umfassend zumindest eine Vorrichtung (36) zum Steuern des Stroms in der elektrischen Schaltung (26, 30, 32), die das erste Heizelement (6), das zweite Heizelement (10) und die Stromquelle (24) in Reihe schaltet, wobei die Steuervorrichtung (36) angeordnet ist, um den Strom in der elektrischen Schaltung zu variieren, um gleichzeitig die durch das erste Heizelement (6) und durch das zweite Heizelement (10) abgegebene Heizleistung variieren zu lassen.

10. Einheit zur Wärmebehandlung nach einem der Ansprüche 1 bis 9, umfassend ein System zum Greifen und Bewegen der Vorformlinge (2) auf der vordefinierten Bewegungsbahn (T) in zwei versetzten Reihen (R1, R2) im Raum.

## Claims

1. Unit (1) for thermally treating preforms (2) of a container manufacturing installation, the thermal treatment unit comprising an enclosure delimited by a first wall (4) and a second wall (8) extending on either side of the enclosure within which the preforms (2) travel along a predefined travel path (T) extending in a longitudinal direction, the first wall (4) comprising at least a first heating element (6) and the second wall (8) comprising at least a second heating element (10), forming, with the first heating element (6), a pair of heating elements, the first heating element (6) and the second heating element (10) extending at least in part opposite one another on either side of the enclosure in a transverse direction, substantially perpendicular to the longitudinal direction, each heating element (6, 10) being supplied with electricity by a current source (24), **characterized in that** the first and second heating elements (6, 10) of said pair of heating elements are electrically connected in series to the same current source (24).

2. Thermal treatment unit according to Claim 1, comprising a plurality of pairs of heating elements and a plurality of current sources (24), each pair of heating elements being electrically connected in series to a corresponding current source (24).

3. Thermal treatment unit according to Claim 2, wherein the first heating elements (6) of said pairs are distributed at least in the longitudinal direction on the first wall (4) and the second heating elements (10) of said pairs are distributed in the longitudinal direction on the second wall (8), the first and second heating elements (6, 10) of a pair of heating elements extending at least in part opposite one another in the transverse direction.

4. Thermal treatment unit according to Claim 2 or 3, wherein the first heating elements (6) of said pairs are distributed at least in an upright direction, substantially perpendicular to the longitudinal and transverse directions, on the first wall (4) and the second heating elements (10) of said pairs are distributed in the upright direction on the second wall (8), the first and second heating elements (6, 10) of a pair of heating elements extending at least in part opposite one another in the transverse direction.

5. Thermal treatment unit according to any one of Claims 1 to 4, wherein the first and second heating elements (6, 10) each comprise a plurality of monochromatic or pseudo-monochromatic electromagnetic radiation sources (12).

6. Thermal treatment unit according to Claim 5, wherein the first and second heating elements (6, 10) each comprise at least one upper row (14) and at least one lower row (16) of electromagnetic radiation sources (12), said radiation sources (12) being electrically connected in series with one another.

7. Thermal treatment unit according to any one of Claims 1 to 6, wherein the first heating element (6) and the second heating element (10) are offset with respect to one another in the longitudinal direction.

8. Thermal treatment unit according to any one of Claims 1 to 7, wherein an electrical circuit (26, 30, 32) connecting the first heating element (6), the second heating element (10) and the current source (24) in series comprises at least one device for measuring the voltage in said electrical circuit.

9. Thermal treatment unit according to any one of Claims 1 to 8, comprising at least one device (36) for controlling the current in the electrical circuit (26, 30, 32) connecting the first heating element (6), the second heating element (10) and the current source (24) in series, said control device (36) being designed to vary the current in the electrical circuit in order to simultaneously vary the heating power delivered by the first heating element (6) and by the second heating element (10).

10. Thermal treatment unit according to any one of Claims 1 to 9, comprising a system for gripping and moving the preforms (2) along the predefined travel path (T) in two rows (R1, R2) in staggered fashion in the enclosure.
